# EUROPÄISCHE PATENTSCHRIFT

(11) **EP 1 360 209 B1**
(45) Veröffentlichungstag und Bekanntmachung des Hinweises auf die Patenterteilung: **12.04.2006**
(21) Anmeldenummer: 01986699.5
(22) Anmeldetag: 05.10.2001
(51) Int. Cl.: C08B 31/00, C08B 30/12, D21H 17/28

(54) **FRAGMENTIERTE STÄRKE, IHRE HERSTELLUNG UND DEREN VERWENDUNG**
FRAGMENTED STARCH, ITS PRODUCTION AND USE
AMIDON FRAGMENTE, SON PROCEDE DE PRODUCTION ET SON UTILISATION

(30) Priorität: 11.10.2000 DE 10050241
(43) Veröffentlichungstag der Anmeldung: 12.11.2003
(73) Patentinhaber: Emsland-Stärke GmbH, 49824 Emlichheim (DE)
(72) Erfinder: DIJKSTERHUIS, Jan, NL-7751 DA Dalen (NL); JÖNSSON, Bo, 49479 Ibbenburen (DE); DINTELMANN, Thomas, 64380 Rossdorf (DE); WOLL, Karl, Ludwig, 48683 Ahaus (DE)
(74) Vertreter: Neidl-Stippler, Cornelia
(86) Internationale Anmeldenummer: PCT/DE2001/003824
(87) Internationale Veröffentlichungsnummer: WO 2002/030988

(56) Entgegenhaltungen:
- WO-A-02/08516
- WO-A-02/08517
- WO-A-97/46591
- DE-A- 2 408 008
- DE-A- 2 431 199
- DE-A- 2 935 338
- FR-A- 1 449 719
- US-A- 5 122 231

## Beschreibung

Die Erfindung betrifft durch Scherwirkung fragmentierte vernetzte Stärke zum Zusatz bei der Faserstoffherstellung und zum Auftrag auf Faserstoffproduktoberflächen, ein Verfahren zu ihrer Herstellung sowie ihre Verwendung. Sie bezieht sich insbesondere auf fragmentierte Stärkeprodukte, die einen begrenzten Quellungsgrad in Dispersion haben.

Stärke wird häufig als Hilfsstoff bei der Faserproduktherstellung z.B. zur Festigkeitssteigerung des Faserprodukts sowie zur Verbesserung der Retention und der Entwässerbarkeit während des Herstellungsprozesses eingesetzt. Dabei werden hier unter Faserprodukten solche aus Holzfasern, Zellstoff, Holzschliff, Recyclingfaserstoffe, also bspw. Papier, Tapeten, Pappe, Kunststoffaserprodukte, Glasfaserprodukte, Spanplatten, Faserplatten, Faservliese, auch Holzfaservliese, verstanden.

Aus der DE-A-2431199 sind fragmentierte vernetzte Stärken mit einem Quellvermögen zwischen 15 und 5 und einer Teilchengrösse im Bereich von 1 - 10 µm für filmbildende Klebemittel bekannt geworden. Die DE-A-2408008 verwendet nicht fragmentierte Stärken in der Papierherstellung.

Ein Problem beim Stand der Technik ist die ungenügende Retention der Stärke im Faservlies bzw. eine zu tiefe Stärkepenetration beim Oberflächenauftrag, was z. B. die erzielbare Oberflächenfestigkeit oder die Bedruckbarkeit des Faserprodukts limitiert.. Die in der Papiermasse maximal adsorbierbare Menge an unmodifizierter gelöster Stärke liegt meist unter 1 % des Faserproduktes. Durch Modifikationen der Stärke und deren Kombination mit Retentionshilfsmitteln kann dieser Anteil bis auf etwa 2% gesteigert werden. Durch die übliche Ionisierung der Stärke durch Kationisierung oder Anionisierung, die deren Faserfixierung verbessert, tritt eine starke Abhängigkeit der ladungsbedingten Retention von pH-Wert, Salzgehalt und Störstoffbelastung im System auf. Schwankungen der Leitfähigkeit des Kreislaufwassers, wie sie insbesondere bei der Verarbeitung von Recycling-Fasern in den meisten Fabriken ständig auftreten, verändern direkt den Stärkeanteil im Papier. Es müssen aufwendige Massnahmen ergriffen werden, um eine konstante Produktqualität zu erzielen - wenn überhaupt möglich. Die bekannten löslichen Stärken sind überdies enzymatisch leicht abbaubar und damit in Kreisläufen, die Mikroorganismen aufweisen, unbeständig.

Bei der Anlagerung von kornförmiger Stärke an eine Faser kann im Vergleich zu einem gelösten Produkt bei gleichem Oberflächenbe-darf eine vielfache Menge Stärke gebunden werden, da diese neben der reinen Ad-sorption auch noch über Filtrationsmechanismen im Faservlies zurückgehalten werden, so dass ihre Retention erheblich über dem Niveau löslicher Stärken liegen kann.

Das Verhalten von Stärkekörnern in Fasermassen wird im Wesentlichen von folgenden Einflussgrössen bestimmt :
- Grösse des Komes
- Geometrische Form des Kornes
- Zugängliche Ladungen
- Weitere strukturelle, molekulare Eigenschaften der Oberfläche
- Aufnahmefähigkeit des Faserstoffes für niedermolekulare Substanzen.

Diese Kriterien sind für das unbearbeitete Naturprodukt Stärke lediglich über den Wechsel zu einer anderen Stärkesorte und nur in engen Grenzen variierbar. Eine Anpassung der Stärken an die Vorgaben des Produktes wurde bisher durch Veränderung des Faserprodukt-Herstellungsverfahrens erreicht, die immer mit einer Verminderung der Produktionsleistung verbunden war. Ein Anstieg der Retention granulärer Stärke wurde mit geringerer Scherbelastung am Stoffauflauf, durch eine allgemein geringere Arbeitsgeschwindigkeit und mit geringerer Entwässerungsleistung am Sieb erreicht. Höhere Festigkeiten werden über einen höheren Wassergehalt der Bahn beim Eintritt in die Trockenpartie und durch eine langsamere Trocknung erreicht, da so eine weitergehende Verkleisterung der Kömer eintritt. Diese Massnahmen führen zu unerwünscht langen Produktionszeiten.

Bisher musste bei Einsatz von granulären Stärken in der Masse eine wenigstens teilweise Verkleisterung bei der Trocknung des Papiers erfolgen, um dessen Festigkeit zu erhöhen. Bei der Verkleisterung wird mit sinkendem Wassergehalt eine immer höhere Temperatur erforderlich, um die Körner aufzubrechen. Der typische Temperaturverlauf bei der Trocknung ist, dass die Temperatur der Papierbahn erst bei weitgehendem Entzug von Wasser in den zur Verkleisterung erforderlichen Bereich ansteigen kann. Unter diesen wasserarmen Bedingungen verkleistem normale Stärkekörner nur unzureichend. Analog zum Einsatz in der Masse werden auch bei einem Stärkeauftrag auf dieFaserstoffproduktoberfläche ("Oberflächenleimung") derzeit ausschliesslich voll ständig verkleisterte, abgebaute Stärkelösungen eingesetzt, da granuläre Stärken keine ausreichende Affinität zur Faserstoffoberfläche besitzen. Teilverkleisterte Stärkeprodukte haben sich in der Praxis nicht bewährt. Sie sind anwendungstechnisch problematisch, da sie zu starkem Kleben an den Auftragsaggregaten und an den Trockenzylindern führen.

Es ist nun Aufgabe der Erfindung, Stärken so weiterzuentwickeln, dass sie mit geringem Aufwand herstellbar sind und gute Eigenschaften als Hilfsstoffe für die Papierherstellung zeigen. Die Aufgabe wird erfindungsgemäss gelöst durch eine fragmentierte vernetzte Stärke mit den Merkmalen des Patentanspruches 1. Femer bezieht sich die Erfindung auf ein Verfahren zur Herstellung derselben gemäss Patentanspruch 3 sowie auf deren Verwendung nach Patentanspruch 10. Vorteilhafte Weiterbildungen ergeben sich aus den abhängigen Ansprüchen. Dabei wird hier unter Trockenprodukt ein solches verstanden, das eine Feuchtigkeit von weniger als etwa 15% aufweist. Die Dispersion eines typischen erfindungsgemässen Stärkeprodukts weist Teilchen-grössen auf, deren gewichtetes Mittel im Bereich zwischen 5-25 µm liegt, wobei weit über 15 %grösser als 10µm sind.

Unter "durch Scherwirkung fragmentierten" vernetzten Stärken werden solche verstanden, die durch eine Scherwirkung und anschliessende Expansion wie beispielsweise einem Extruder, zerkleinert werden, wobei diese auch verschiedensten chemischen Reaktionen wie Oxidation unterworfen werden können. Als kornförmige Ausgangsstärken eignen sich beispielsweise native, oxidativ, thermisch oder hydrolytisch abgebaute Stärken sowie deren chemisch modifizierte Ether-oder Esterderivate.

Die Herstellung ionisierter Derivate kann z. B. mit folgenden Kationisierungs- bzw. Anionisierungsmitteln im Substitutionsbereich zwischen 0,02-0,1 (D. S.) erfolgen :3-Chlor-2-hydroxypropyltrimethlammoniumchlorid, 2,3-Epoxipropyltrimelthylammoniumchlorid,3-Chlor-2-hydroxypropyldimethyldodecylammoniumchlorid, 3-Chlor-2-hydroxypropyldimethyloctadecyl-ammoniumchlorid, Natriummonochloracetat, Essigsäureanhydrid, Maleinsäureanhydrid.

Zur Vernetzung werden bevorzugt 0,1 - 0,8 Gew.% eines bifunktionellen oder polyfunktionellen Mittels, berechnet auf Basis des Gewichts der Stärke in Kornform, das mit wenigstens zwei freien Hydroxylgruppen der Stärkemoleküle reagieren kann, ausgewählt aus der Gruppe bestehend aus aliphatischen Epoxyhalogen- oder Dihalogenverbindungen, Phosphoroxyhalogeniden, Alkalimethaphosphaten, Aldehyden, eingeschlossen aldehydhaltige Harze, Säureanhydride und polyfunktionellen Reagenzien wie beispielsweise Cyanursäurechlorid, mit den Stärkekörner umgesetzt.

Chemische Modifizierungsreaktionen können sowohl vor der Extrusion als auch im Extruder durchgeführt werden. Es kann sinnvoll sein, diese vor der Extrusion durchzuführen, weil dann nach Fragmentierung im Extruder und anschließender Dispergierung des gemahlenen Produkts in Wasser Dispersionen mit kleineren Fragmenten entstehen.

Die Stärken können vorzugsweise Knollen- und Wurzelstärken sowie Getreidestärken als Ausgangsmaterial haben. Typische Knollen- und Wurzelstärken sind Kartoffelstärke, Tapiokastärke; wobei leicht verfügbare Getreidestärken Maisstärke oder Weizenstärke sind. Die Erfindung ist keineswegs auf diese Stärken beschränkt - diese sind nur auf dem Markt z.Z. leicht zu beschaffen. Es können selbstverständlich auch Mischungen aus einer oder mehreren Stärken, ausgewählt aus der Gruppe bestehend aus nativen, oxidativ, thermisch oder hydrolytisch abgebauten sowie chemisch modifizierten Knollen-, Wurzel- oder Getreidestärken eingesetzt werden. Darüber hinaus können auch Knollen-, Wurzel- oder Getreidemehle als Rohstoff eingesetzt werden.

Überraschenderweise konnte nur mittels eines Extruders (sowohl Einschnecken- als auch Doppelschneckenextruder), ausgehend von z.B. Kartoffelstärkekörnern, eine definierte Fragmentierung erreicht werden, wobei das fertige Trockenprodukt unter 2 mm Körnung, vorzugsweise unter 1 mm, mit einer mittleren Partikelgröße von ca. 500 m gemahlen wird.

Das mechanische und thermische Zerkleinern der vernetzten Stärkekörner führt dabei zu Fragmenten, deren Oberfläche nicht aus geordneten molekularen Bezirken besteht, sondern von losen, teilhydrolysierten Polysaccharidsträngen gebildet wird. Diese nach Quellen in Wasser "weiche" Schicht ermöglicht größere Berührungsflächen beim Anlagern an Fasern und damit festere Bindung der Stärkepartikel an Fasern. Mit speziellen Labormühlen gelang eine solche Fragmentierung nur bedingt.

Der Einsatz der erfindungsgemäßen fragmentierten vernetzten Stärken wirkt sich insbesondere auf die Papierqualität und auf die Produktivität der Papierherstellung positiv aus. Durch die erfindungsgemäße Anwendung dieser Produkte werden gegenüber anderen löslichen oder granulären Stärken wesentlich höhere Retentionswerte an Zellulosefasern erreicht, ohne dabei das Entwässerungsverhalten der Papierbahn negativ zu beeinflussen. Mit den resultierenden hohen Stärkemengen im Papier ist es möglich, stärkeren Einfluß auf die Produkteigenschaften zu haben.
Z. B. kann die Füllstoffretention ohne Festigkeitseinbußen signifikant gesteigert werden. Dabei ist das Verhalten der fragmentierten Stärken weitgehend unabhängig von der Art des eingesetzten Faser- und Füllstoffs sowie der Salz- und Störstofffracht des Papiermaschinenkreislaufs. Bei damit erzeugten Papieren werden Zug-, Stauch-, Spalt- und Rupffestigkeit gleichermaßen verbessert. Die Stärkefragmente zeigen insbesondere bei allen Teilvorgängen der Papierherstellung ein günstiges Verhalten:
- Bei der Stoffaufbereitung quellen sie unter Aktivierung ihrer Oberfläche auf, die Partikel sind leicht adsorbierbar.
- Zu Beginn der Entwässerung reduzieren sie die rasche Durchströmung des Faservlieses, begünstigen damit zusätzlich die Retention von Fein- und Füllstoffen und wirken Störungen des Blattgefüges entgegen. Im weiteren Verlauf verbessert die Flockung der Komponenten das Ausfließen von Wasser und damit die leichtere Verdichtung und Entwässerung der Bahn.
- In der Pressenpartie wird mechanisch die Berührungsfläche zwischen Stärkefragmenten und anderen Komponenten erhöht.
- Beim Entzug weiteren Wassers in der Trockenpartie bilden sich stabile Haftstellen des Stärkeproduktes mit Fasern, Fein- und Füllstoff aus.
- Die erfindungsgemäßen fragmentierten Stärken sind weitgehend unempfindlich gegenüber Schwankungen der Wasserqualität.
- Sie sind nur langsam aerob abbaubar, wodurch eine bessere Verweilzeit in geschlossenen Faserstoffherstellungssystemen und ein höherer Verwendungsgrad der Stärke bzw. geringerer Verlust durch Abbau derselben durch Mikroorganismen resultiert.

Wird eine Dispersion fragmentierter Stärke auf eine Faserproduktoberftäche aufgetragen, unterscheidet sie sich von klassischen Stärkelösungen hinsichtlich ihres Penetrations- und Abdeckverhaltens.

Bei herkömmlichen Lösungen abgebauter Stärke (oxidativer, hydrolytischer oder enzymatischer Abbau) penetriert ein gewisser Anteil der Stärke in das Innere des Faservlieses und steht somit der Substratoberfläche nicht mehr in maximaler Effizienz zur Verfügung. Fragmentierte Stärke - mechanisch zerkleinerte Stärke - hingegen verbleibt aufgrund ihres Teilchencharakters nahezu vollständig and der Faserstoffproduktoberfläche und wird dort über stabile Haftstellen gebunden. Eine Penetration ins Innere des Vlieses ist dann nicht mehr möglich, allerdings können Poren and der Vliesoberfläche von den Stärkepartikeln ausgefüllt bzw. abgedeckt werden.

Somit verbleibt mehr Stärke an der Faserproduktoberfläche zur Verbesserung der Oberflächeneigenschaften des Produkts - bei Papier bspw. der Rupffestigkeit, Rauhigkeit, Luftpermeabilität, Tintenabsorption, Verhinderung von Stauben (Dustingverhalten) etc. zur Verfügung, was unter anderem zur Verbesserung der Be- und Verdruckbarkeit oder zu vollständig neuen Oberflächeneigenschaften der mit Stärkefragmenten ausgerüsteten Faserstoffprodukte führt.

Zur Erzielung besonderer Produkteigenschaften und Effekte kann eine weitere Verarbeitung z.B. Kalandrieren des mit fragmentierter Stärke beschichteten Faserstoffproduktes vorteilhaft sein. Die Applikation der gequollenen Stärkepartikel auf die Faserstoffproduktoberfläche ist mittels geeigneter üblicher Auftragsysteme (z. B. in der Papierindustrie übliche Streichmaschinen, wie Leimpresse, Filmpresse etc.) leicht möglich.

Beim Einsatz in der Faserstoffherstellung, insbesondere Papierherstellung, kann die erfindungsgemäße fragmentierte Stärke als Trockenprodukt direkt oder mit Wasser unter Bildung einer wäßrigen Dispersion gemischt den Papierfasern während der Papierherstellung zugesetzt sowie mittels o.g. Auftagssysteme als wäßrige Dispersion auf die Vliesoberfläche aufgetragen werden.

Meist werden im tatsächlichen Einsatz als "fragmentierte Stärke" für Papierherstellungszwecke stabile Dispersionen der fragmentierten Stärkekörner eines vernetzten Stärkeprodukts mit begrenztem Quellungsgrad - zwischen 15 bis 2 - eingesetzt, bei denen mehr als 70 Gew.% der gesamten Stärke in Form gesonderter Bruchstücke von vernetzten Stärkekörnern vorliegen. Es kann günstig sein, daß mindestens eine fragmentierte Stärke dem Faserstoff bzw. der Faserstoffproduktoberfläche separat zugesetzt wird. In anderen Fällen kann es sich als erforderlich erweisen, daß mindestens eine fragmentierte Stärke dem Faserstoff nach Mischung bzw. Dispergierung zusammen mit anorganischen oder organischen Füllstoffen und Pigmenten wie Aluminiumoxid, Bariumsulfat, Calciumcarbonat, Kaolin, Titandioxid, Talkum, Satinweiß, Silicaten oder Kunststoffpigmenten zugesetzt wird.

Darüber hinaus kann es sich als günstig erweisen, die fragmentierten Stärken dem Faserstoff bzw. auf die Faserproduktoberfläche separat, vor oder nach der Zugabe, oder nach Mischung bzw. Dispergierung zusammen mit anorganischen oder organischen Additiven, welche als Monomere, Oligomere oder Polymere mit unterschiedlicher Ladung, Polarität oder Hydrophobie vorliegen können, zuzugeben.

Zur Aktivierung der Produkte kann eine Vorbehandlung mit einem Lösungsmittel durchgeführt werden, um eine Quellung zu erreichen. Als Lösungsmittel wird hier Wasser bevorzugt verwendet. Die Quellung und Dispergierung kann in kaltem, heißem oder siedendem Wasser allein oder in zusammen mit weiteren Hilfsstoffen erfolgen, Eine sehr schnelle Quellung und Dispergierung wird durch das Einmischen von Dampf in eine Suspension der Stärkefragmente oder durch Kochen mittels eines Düsenkochers erreicht. Auch hier sind Kombinationen mit weiteren Hilfsstoffen möglich.

Die Bestimmung des Quellungsgrades erfolgt nach der Formel:
Q = Gewicht gequollene Stärke/Gewicht trockene Stärke im gleichen Feststoff.

Die Bestimmung erfolgt einfach durch Kochen der Stärke in Wasser und Bestimmen des Gewichts des dabei gebildeten wasserhaltigen Stärkeprodukts sowie Trocknen des Produkts und Bestimmung des Gewichts des getrockneten Produkts als Gewicht der trockenen Stärke.

Nachfolgend wird die Erfindung anhand bevorzugter Ausführungsbeispiele sowie der begleitenden Zeichnung näher erläutert, auf die sie aber keineswegs beschränkt ist, sondern alternative Ausführungsformen beinhaltet wie sie dem Fachmann innerhalb des Rahmens der Patentansprüche geläufig sind. Dabei zeigt:
Fig. 1 einen schematischen Vergleich unmodifizierter Kartoffelstärke mittlerer Größe (1a) und fragmentierter Kartoffelstärke (1b)
Fig. 2 einen Vergleich der Eigenretention fragmentierter Stärke mit unfragmentierter granulärer Stärke bei der Laborblattbildung (Dosiermengen jeweils 2,5 % und 10 % atro), und
Fig. 3 Reißlängen von Laborblättern mit und ohne fragmentierter Stärke in Kombination mit Füllstoff (Calciumcarbonat).
Fig. 4 Vergleich von Tintendruck auf mit fragmentierter Stärke behandeltem Papier und mit Lösung abgebauter Stärke behandeltem Papier (4o-fache Vergrößerung unter Lichtmikroskop)
   Fig. 4a: Büropapier mit Auftrag von fragmentierter Stärke.
   Fig. 4b: Büropapier mit Auftrag von Stärkelösung.

### Beispiel 1

### Die Herstellung anionisch modifizierter fragmentierter Kartoffelstärke

Kartoffelstärke, die zuvor mit 0,1-0,8 Gew. % 1,2-Epoxy-3-chlorpropan vemetzt wurde, wurde mit 2-12 Gew. % Natriummonochloracetat und einem Katalysator in einem Schneckenextruder der Marke Buehler bei einer Temperatur von 110-180 °C und einem Druck von 20-60 barfragmentiert. Am Extruderende ist eine Düse angeordnet, die das austretende vernetzte Produkt in Umgebungstemperatur und - druck verdüste. Um größere Verklumpungen abzutrennen, wird das Granulat gesiebt und anschließend abgesackt.

Die so hergestellten fragmentierten vernetzten Stärkekörner besaßen eine mittlere Korngröße (gewichtetes Mittel) von 400-600 µm und einen Feuchtegehalt von 10-15 Gew. %.

### Beispiel 2

### Die Herstellung kationisch modifizierter fragmentierter Kartoffelstärke

Kartoffelstärke wird nach vorheriger Reaktion mit 2-12 Gew. % 2,3-Epoxipropyltrimethyl-ammoniumchlorid mit 0,1-0,8 Gew. % 1,2-Epoxy-3-chlorpropan als Vernetzungsmittel in einem Schneckenextruder der Marke Buehler bei einer Temperatur von 110-180 °C und einem Druck von 20-60 bar fragmentiert. Am Extruderende ist eine Düse angeordnet, die das austretende vernetzte Produkt in Umgebungstemperatur und -druck verdüst. Um größere Verklumpungen abzutrennen, wird das Granulat gesiebt und anschließend abgesackt.

Die so hergestellten fragmentierten vernetzten Stärkekörner besitzen eine mittlere Korngröße (gewichtetes Mittel) von 400-600 µm und einen Feuchtegehalt von 10-15 Gew. %.

### Beispiel 3

### Die Herstellung fragmentierter, nicht ionisierter Kartoffelstärke

Kartoffelstärke wird mit 0,1-0,8 Gew. % 1,2-Epoxy-3-chlorpropan in Slurry vorvernetzt und in einem Schneckenextruder der Marke Buehler bei einer Temperatur von 110-180 °C und einem Druck von 20-60 bar fragmentiert.

Am Extruderende ist eine Düse angeordnet, die das austretende vernetzte Produkt in Umgebungstemperatur und -druck verdüste.

Um Verklumpungen abzutrennen, wird das Granulat gesiebt und anschließend abgesackt. Die so hergestellten fragmentierten vernetzten Stärkekörner besaßen eine mittlere Korngröße (gewichtetes Mittel) von 350-550 µm und einen Feuchtegehalt von 10-15 Gew. %.

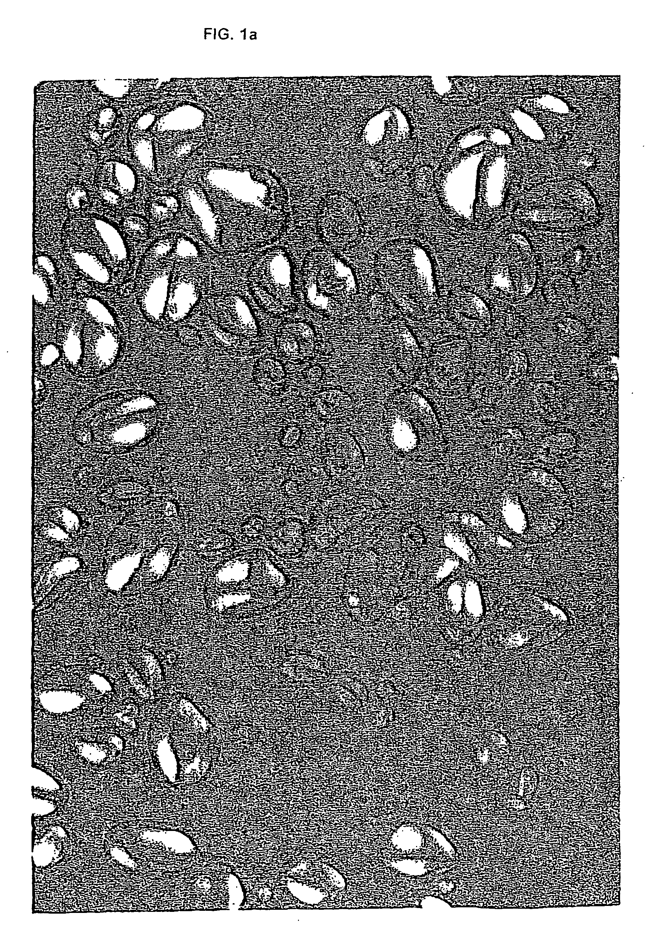

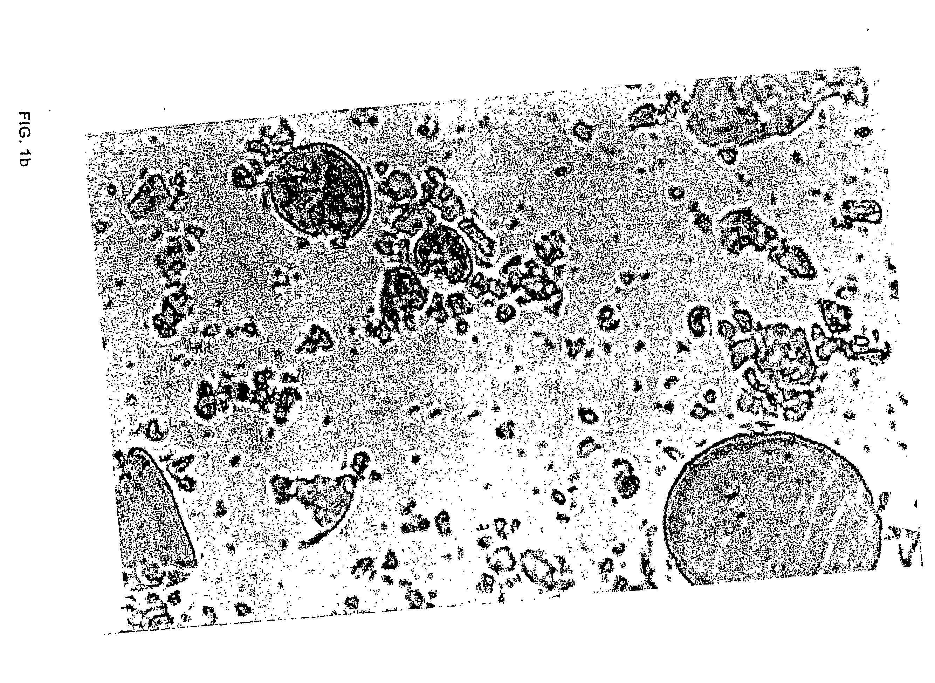

In Fig. 1 ist schematisch ein Größen- und Formvergleich zwischen einer herkömmlichen kornförmigen Stärke und einer erfindungsgemäßen fragmentierten Stärke gezeigt. Es ergibt sich, daß die erfindungsgemäßen Stärkefragmente gegenüber Stärkekörnern eine zum Rückhalt an Fasern geeignete eckige Form aufweisen und daher leichter mechanisch mit Fasern wechselwirken können.

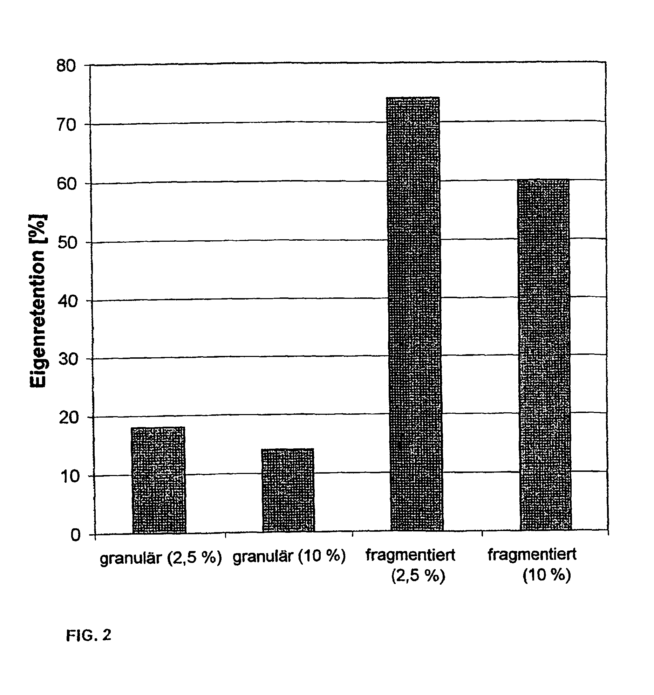

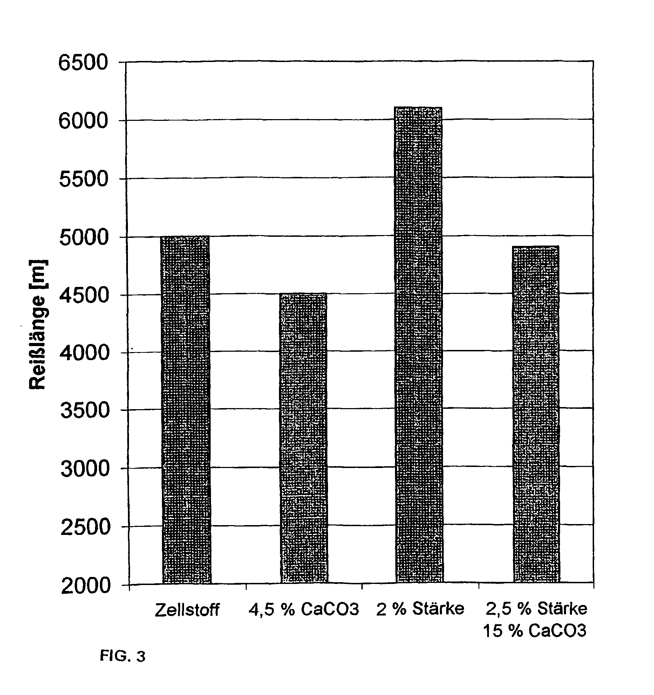

Die erfindungsgemäßen fragmentierten Stärken haben gegenüber granulären Stärke eine höhere Eigenretention (Fig.2) und beeinflussen auch das Festigkeitsverhalten damit hergestellter Faserprodukte positiv - insbesondere können durch Füllstoffe (Calciumcarbonat) bedingte Festigkeitsverluste, wie in Fig. 3 gezeigt, ausgeglichen werden.

### Beispiel 4

Vergleich der Tintenstrahl-Bedruckbarkeit von mit fragmentierter Stärke oberflächen behandeltem und mit konventionell abgebauter Stärke oberflächenbehandeltem Papier

Es wurde Büropapier mit einem Flächengewicht von 81g/m² hergestellt, indem ein Rohpapier - ein ohne Stärkeauftrag auf die Papieroberfläche hergestelltes, mit Calciumcarbonat gefülltes Papier (100% holzfrei, Flächengewicht 75g/m²) zur Herstellung von Mehrzweckbüropapier ("MOP = multi - purpose - office paper) in einer Laborleimpresse Typ HFR 29779 der Fa Mathis, Schweiz, bei einem Walzenanpreßdruck von 3 bar und einer Leimflottentemperatur von 50 Grad C behandelt wurde. Als Leimflotte wurde einmal eine 10 % ige wäßrige Dispersion einer kationisierten fragmentierten Stärke (Kationisierungsgrad von 0,03) gemäß Beispiel 2 und als Vergleich eine 10 % ige Lösung einer oxidativ abgebauten, kationisierten Maisstärke (Kationisierungsgrad von 0,03, Viskosität 10 %ig: 55 mPas gemessen nach Brookfield RVT, bei 50°C, 100 rpm) in einer Menge von 3 g/m² Trockenmasse pro Blattseite beidseitig aufgebracht. Anschließend wurden die Papiermuster 1 h bei 100 Grad C im Trockenschrank getrocknet und danach 48 Stunden unter Normklima (23 Grad C, 50% relative Luftfeuchte) konditioniert. Kalandrierung erfolgte anschließend mittels eines Laborkalanders GA 9869 der Maschinenfabrik Gebr. Kesten, Niederlande, bei einem Liniendruck von 50 kg/cm2 und einer Walzentemperatur von 70 Grad C.

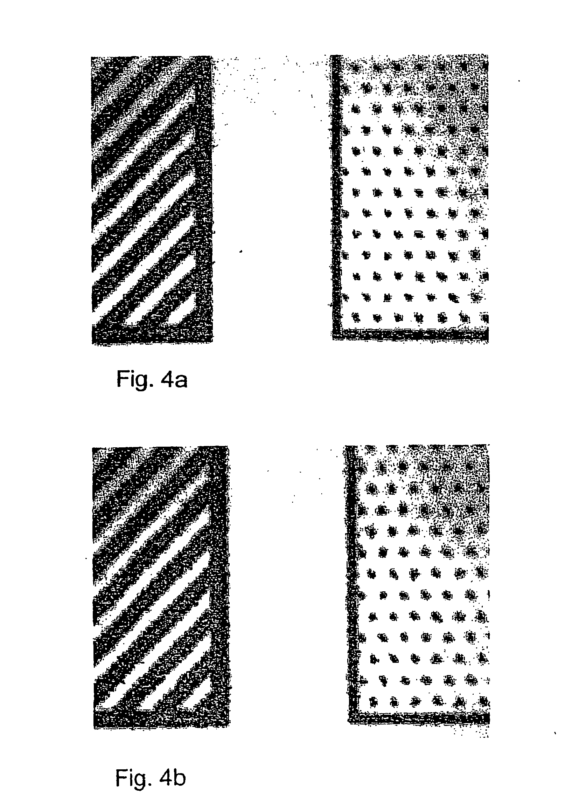

Aus den in Fig. 4 gezeigten, 40 fach vergrößerten Aufnahmen einer Draufsicht auf mittels eines HP-Deskjet 850 C Tintenstrahldruckers (erhältlich von der Fa. Hewlett-Packard, USA) mit schwarzer Farbe hergestellten Testbildes zeigen deutlich, daß die Inkjet-Bedruckbarkeit des mittels fragmentierter Stärke oberflächenbehandelten Papiers (Fig 4a) gegenüber dem mit herkömmlicher Stärkelösung behandeltem Papier (Fig. 4b) verbessert ist - es tritt weniger Verlaufen der Tinte ("feathering") auf und die Linien erscheinen klarer.

### Beispiel 5

Vergleich der Rupffestigkeiten von mit konventionell abgebauten beschichtetem Büropapier und mit fragmentierter Stärke behandeltem Büropapier nach dem IGT-Verfahren

Analog zu den beiden Versuchspapieren des Beispiels 4 behandelte Papierblätter wurden einem Rupftest unterworfen.

Rupfen wird allgemein als Beschädigung der Papieroberfläche während des Druckens definiert. Beim Abheben der Druckform von Papier über die Druckfarbe eine gewisse Kraft auf das Papier aus. Bei zunehmender Geschwindigkeit sowie zunehmender Viskosität und Zügigkeit der Farbe nimmt die Kraft zu. Übersteigt sie einen Grenzwert, kommt es zu Beschädigungen der Papieroberfläche. Der Test zur Bestimmung von Rupfgeschwindigkeit wird hier nach ISO 3782 und 3783 durchgeführt. Dabei wird mit dem IGT-Bedruckbarkeitsprüfgerät auf das zu testende Papier mit zunehmender Geschwindigkeit Druck ausgeübt. Dazu wird Rupföl anstelle der beim Drucken verwendeten Farbe eingesetzt. Rupfgeschwindigkeit und Rupffestigkeit werden aus dem Abstand zwischen Druckbeginn und der Stelle abgelesen, an der die ersten Schäden am Papier auftreten Als Rupfgeschwindigkeit wird die Geschwindigkeit, bei der das Rupfen auftritt. bezeichnet. Es handelt sich nicht um die Geschwindigkeit von Druckmaschinen in der Praxis. Die Rupffestigkeit setzt sich aus dem Produkt der Rupfgeschwindigkeit im m/s und der Viskosität in Pa-s des eingesetzten Rupföls zusammen und wird als VVP (Viscosity Velocity product = Viskositäts-Geschwindigkeitsprodukt) bezeichnet. Dieses ist ein konstanter Wert für ein bestimmtes Papier. Mit VVP können verschiedene Papiersorten miteinander verglichen werden.

IGT-Rufpöle sind Newtonsche Flüssigkeiten, deren Viskositätsverhalten nicht von der Geschwindigkeit abhängig ist.
Die Ergebnisse des Rupftests zwischen den beiden Papieren des Beispiels 5 sind in der nachfolgenden Tabelle 1 dargestellt:

**Tabelle 1: Steigerung der Rupffestigkeit von Büropapier (kalandriert, IGT-Methode W 31), (gemessen als VVP in N/m)**

| | | |
|---|---|---|
| | Auftragsmenge beidseitig (g/m²) | WP (N/m) |
| Rohpapier* | 0 | 18 |
| Referenz 1 ** | 3,0 | 56 |
| Referenz 2*** | 3,0 | 77 |
| Fragmentierte Stärke **** | 3,0 | 105 |

| | | |
|---|---|---|
| * Flächengewicht 75g/m², ohne Stärkeleimung | | |
| **mit oxidativ abgebauter Kartoffelstärkelsg1 geleimt | | |
| ***mit kationisierter (DS von 0,03), oxidativ abgebauter Kartoffelstärkelsg1 geleimt | | |
| **** kationisiert (DS von 0,03) auf Basis Kartoffelstärke | | |
| 1: Viskosität 60 mPas bei einer Konzentration von 10 % gemessen nach Brookfield RVT, bei 50 °C, 100 rpm | | |

### Beispiel 6

### Erniedrigung der Luftdurchlässigkeit von Büropapier mit unterschiedlicher Leimung

Die Luftdurchlässigkeit von Büropapier ist u. a. als ein Maß für die Güte der Oberflächenverleimung anzusehen - je dichter die Verleimung, je geringer ist die Luftdurchlässigkeit. Hier wurden zwei Papiere des Beispiels 5 miteinander verglichen. Es wurde das Verfahren zur Messung der Luftdurchlässigkeit nach Gurley mit einem Densometer der Fa. Messmer-Buchel, NL, Typ K 522 eingesetzt. Das Verfahren entspricht der ISO-Norm 3687, ASTM D 726 oder auch TAPPI T 460. Dabei wird die Sinkgeschwindigkeit eines Gewichts in einem Meßzylinder gemessen, das Luft durch ein unter dem Meßzylinder eingespanntes Papier drückt. Je schneller die Sinkgeschwindigkeit, je durchlässiger das Papier. Als Einheit wird die Zeit, die das Gewicht zum Herabfallen gegen die Luftsäule im Zylinder, die durch das Papier gedrückt wird, genommen.

Die Ergebnisse der nachstehenden Tabelle 2 zeigen, daß die Verwendung fragmentierter Stärkelösung als Oberflächenverleimung gegenüber herkömmlich oxidativ abgebauter Kartoffelstärkelösung zu einer mehr als Verdoppelung des Luftwiderstandes führt, wodurch gezeigt ist, daß der Einsatz fragmentierter Stärke für die Oberlfächenverleimung zu erheblich verbesserten Papiereigenschaften führt.

**Tabelle 2: Erniedrigung der Luftdurchlässigkeit von Büropapier (kalandriert, gemessen nach Gurley)**

| | Auftragsmenge beidseitig (g/m²) | Luftwiderstand (s) |
|---|---|---|
| Referenz*** | 3,0 | 55 |
| Fragmentierte Stärke **** | 3,0 | 140 |

| | | |
|---|---|---|
| *** mit kationisierter (DS von 0,03), oxidativ abgebauter Kartoffelstärkelsg1, geleimt | | |
| **** kationisiert (DS von 0,03) auf Basis Kartoffelstärke | | |
| 1:Viskosität 60 mPas bei einer Konzentration von 10 % gemessen nach Brookfield RVT, bei 50 °C, 100 rpm | | |

## Patentansprüche

1. Durch Scherwirkung fragmentierte vernetzte Stärke zum Zusatz bei der Faserstoffherstellung und zum Auftrag auf Faserstoffproduktoberflächen, wobei das Quellvermögen des Stärkeprodukts in Wasser zwischen 15 bis 2 beträgt; in Form von Bruchstücken vernetzter Stärkekörner mit einer Teilchengröße (gewichtetes Mittel) des Trockenprodukts im Bereich von 1 bis 1000 µm, wobei weit über 15% größer als 10 µm ist.

2. Fragmentierte vernetzte Stärke nach Anspruch 1, **dadurch gekennzeichnet, daß** die Stärke ionisiert ist.

3. Verfahren zur Herstellung der vernetzten, durch Scherwirkung fragmentierten Stärke nach Anspruch 1 oder 2, **gekennzeichnet durch**:
- Umsetzung von kornförmiger Stärke mit einem bi- oder polyfunktionellen Stärkevernetzungsmittel,
- Bearbeiten der vernetzten Stärkekörner in Gegenwart von nicht mehr als 30 % Feuchtigkeit in einem Extruder **durch** Wärme, Druck und Scherkräfte, und
- Verdüsen des aus dem Extruder, in dem das Stärkederivat erhöhter Temperatur und Druck ausgesetzt ist, austretenden Stärkederivats in einen Bereich mit Umgebungstemperatur und -druck unter schlagartigem Entweichen von Wasserdampf aus demselben.

4. Verfahren nach Anspruch 3, **dadurch gekennzeichnet, daß** 0,1 bis 8 Gew.-% eines bifunktionellen oder polyfunktionellen Mittels, berechnet auf Basis des Gewichts der Stärke in Komform, das mit wenigstens zwei freien Hydroxylgruppen der Stärkemoleküle reagieren kann, ausgewählt aus der Gruppe bestehend aus aliphatischen Epoxyhalogen- oder Dihalogenverbindungen, Phosphoroxyhalogeniden, Alkalimetaphosphaten, Aldehyden, eingeschlossen aldehydhaltige Harze, Säureanhydriden und polyfunktionellen Reagenzien wie beispielsweise Cyanursäurechlorid, eingesetzt wird.

5. Verfahren nach Anspruch 3 oder 4, **dadurch gekennzeichnet, daß** als kornförmige Ausgangsprodukte native, oxidativ, thermisch oder hydrolytisch abgebaute Stärken als auch chemisch modifizierte Stärken, deren Ether oder Esterderivate eingesetzt werden.

6. Verfahren nach einem der vorangehenden Ansprüche 3 bis 5, **dadurch gekennzeichnet, daß** Knollen- und Wurzelstärken sowie Getreidestärken, Knollen-, Wurzelsowie Getreidemehle als Ausgangsmaterial eingesetzt werden.

7. Verfahren nach Anspruch 6, **dadurch gekennzeichnet, daß** die Knollen- und Wurzelstärke ausgewählt wird aus der Gruppe bestehend aus: Kartoffelstärke, Tapiokastärke.

8. Verfahren nach Anspruch 6, **dadurch gekennzeichnet, daß** die Getreidestärke ausgewählt wird aus der Gruppe bestehend aus: Maisstärke oder Weizenstärke.

9. Verfahren zur Herstellung der fragmentierten vernetzten Stärken nach einem der Ansprüche 2 bis 10, **dadurch gekennzeichnet, daß** eine simultane Vernetzung und Fragmentierung im Extruder durchgeführt wird.

10. Verwendung der durch Scherwirkung fragmentierten vernetzten Stärken nach Anspruch 1 zur Herstellung von Faserprodukten wie Holzfaserprodukten, Zellstoff, Holzschliffprodukten, Recyclingfaserstoffen und deren Mischungen, Papier, Pappe, Tapeten, Kunststoffaserprodukten, Glasfaserprodukten.

11. Verwendung nach Anspruch 10, **dadurch gekennzeichnet, daß** mindestens eine fragmentierte Stärke dem Faserstoff separat während der Faserstoffherstellung zugesetzt bzw. auf dessen Oberfläche aufgetragen wird.

12. Verwendung nach Anspruch 10, **dadurch gekennzeichnet, daß** mindestens eine fragmentierte Stärke in Mischung zusammen mit anorganischen oder organischen Füllstoffen und Pigmenten wie Aluminiumoxid, Bariumsulfat, Calciumcarbonat, Kaolin, Titandioxid, Talkum, Satinweiß, Silicaten oder Kunststoffpigmenten dem Faserstoff während der Faserstoffherstellung zugesetzt oder auf die Faserstoffproduktoberfläche aufgetragen wird.

13. Verwendung der fragmentierten Stärken nach Anspruch 10, **dadurch gekennzeichnet, daß** die fragmentierten Stärken dem Faserstoff separat, vor oder nach der Zugabe, oder nach Mischung bzw. Dispergierung zusammen mit anorganischen oder organischen Additiven, welche als Monomere, Oligomere oder Polymere mit unterschiedlicher Ladung, Polarität oder Hydrophobie vorliegen können, zugesetzt bzw. auf die Faserproduktoberfläche appliziert werden.

14. Verwendung der fragmentierten Stärken nach Anspruch 10, **dadurch gekennzeichnet, daß** zur Aktivierung der Produkte eine Behandlung mit einem Lösungsmittel durchgeführt wird, um eine Quellung und Dispergierung zu erreichen.

## Revendications

1. Amidon réticulé fragmenté par effet de cisaillement, pour addition lors de la production de matières fibreuses et pour application sur des surfaces de produits à base de matières fibreuses, le pouvoir gonflant dans l'eau du produit à base d'amidon se trouvant entre 15 et 2 ; grains d'amidon réticulés en forme de fragments, d'une granulométrie (moyenne pondérée) du produit sec dans la plage de 1 à 1 000 µm, une quantité très supérieure à 15% étant d'une granulométrie supérieure à 10 µm.

2. Amidon réticulé fragmenté selon la revendication 1, **caractérisé en ce que** l'amidon est ionisé.

3. Procédé de production de l'amidon réticulé fragmenté par effet de cisaillement, selon la revendication 1 ou 2, **caractérisé par** :
- la transformation d'amidon granulaire avec un agent de réticulation d'amidon bi- ou polyfonctionnel,
- le traitement des grains d'amidon réticulés en présence d'une humidité non supérieure à 30% dans une extrudeuse, par la chaleur, la pression et les forces de cisaillement, et
- l'atomisation du dérivé d'amidon sortant de l'extrudeuse, dans laquelle il est exposé à une température et à une pression élevées, dans une zone où règnent la température et la pression du milieu environnant avec échappement instantané de vapeur d'eau de celui-ci.

4. Procédé selon la revendication 3, **caractérisé en ce que** l'on utilise de 0,1 à 8% en poids d'un agent bifonctionnel ou polyfonctionnel, calculée sur la base du poids de l'amidon en forme de grains, qui peut réagir avec au moins deux groupes hydroxyle libres de la molécule d'amidon, agent choisi dans le groupe constitué de composés époxyhalogénés ou dihalogénés aliphatiques, oxyhalogénures de phosphore, métaphosphates alcalins, aldéhydes, y compris les résines contenant des aldéhydes, anhydrides d'acides et réactifs polyfonctionnels comme par exemple le chlorure de l'acide cyanurique.

5. Procédé selon la revendication 3 ou 4, **caractérisé en ce que** l'on utilise, comme produits de départ granulaires, des amidons naturels, dégradés par voies oxydative, thermique ou hydrolytique, mais aussi des amidons chimiquement modifiés, leurs dérivés éthers ou esters.

6. Procédé selon l'une quelconque des revendications 3 à 5 précédentes, **caractérisé en ce que** l'on utilise des amidons de tubercules et de racines ainsi que des amidons de céréales, des farines de tubercules, de racines, et de céréales comme matière de départ.

7. Procédé selon la revendication 6, **caractérisé en ce que** l'amidon de tubercules et de racines est choisi dans le groupe constitué de l'amidon de pommes de terre et de l'amidon de tapioca.

8. Procédé selon la revendication 6, **caractérisé en ce que** l'amidon de céréales est choisi dans le groupe constitué de l'amidon de maïs et de l'amidon de froment.

9. Procédé de production des amidons réticulés fragmentés selon l'une quelconque des revendications 2 à 10, **caractérisé en ce que** l'on effectue une réticulation et une fragmentation simultanées dans l'extrudeuse.

10. Utilisation des amidons réticulés fragmentés par effet de cisaillement selon la revendication 1, pour la production de produits à base de fibres comme les produits en fibres de bois, la cellulose, les produits en pâte mécanique, les matières fibreuses de recyclage et leurs mélanges, papier, carton, papiers peints, produits en fibres de plastique, produits en fibres de verre.

11. Utilisation selon la revendication 10, **caractérisée en ce que** l'on ajoute au moins un amidon fragmenté à la matière fibreuse, séparément, pendant la production de cette matière fibreuse, ou on l'applique sur sa surface.

12. Utilisation selon la revendication 10, **caractérisée en ce que** l'on ajoute à la matière fibreuse, pendant la production de cette matière fibreuse, au moins un amidon fragmenté en mélange avec des charges inorganiques ou organiques et des pigments comme l'oxyde d'aluminium, le sulfate de baryum, le carbonate de calcium, le kaolin, le dioxyde de titane, le talc, le blanc de satin, les silicates ou les pigments de plastique, ou on l'applique sur la surface des produits en matière fibreuse.

13. Utilisation des amidons fragmentés selon la revendication 10, **caractérisée en ce que** les amidons fragmentés sont ajoutés à la matière fibreuse séparément, avant ou après l'addition, ou après le mélange ou selon le cas la dispersion, conjointement avec des additifs inorganiques ou organiques, qui peuvent se présenter sous forme de monomères, oligomères ou polymères d'une charge, d'une polarité ou d'une hydrophobie variables, ou selon le cas sont appliqués sur la surface du produit à base de fibres.

14. Utilisation des amidons fragmentés selon la revendication 10, **caractérisée en ce que** l'on effectue, pour l'activation des produits, un traitement avec un solvant pour obtenir un gonflement et une dispersion.

## Claims

1. Cross-linked starch fragmented by shearing for addition in the production of fibrous material and for application on fibrous material product surfaces, whereby the expansion capacity of the starch product in water lies between 15 to 2; cross-linked starch granules in the form of fragments with a particle size (weighed average) of the dry product in the range of 1 to 1000 µm, whereby it is far above 15% greater than 10 µm.

2. Fragmented cross-linked starch according to claim 1,
**characterized in that**
the starch is ionised.

3. Process for production of the cross-linked starch fragmented by shearing effect according to claim 1 or 2,
**characterized by**:
- Conversion of granule-shaped starch with a bi- or poly-functional starch cross-linked agent;
- Treatment of the cross-linked starch granules in presence of not more than 30% moisture in an extruder with heat, pressure and shearing forces, and
- Nozzle-jetting of the starch derivative coming out of the extruder, in which the starch derivative is subjected to increased temperature and pressure, into a region with atmospheric temperature and pressure under escape of water vapour from the same in sudden bursts.

4. Process according to claim 3,
**characterized therein that**
0,1 to 8 percent by weight of a bi-functional or poly-functional agent is used, calculated on the basis of the weight of the starch in granule form, which can react with at least two hydroxyl groups of starch molecules, selected from the group consisting of aliphatic epoxy-halogen or di-halogen compounds, phosphoric oxyhalogenides, alkali metal phosphates, aldehydes including aldehyde containing resins, acid anhydrides and poly-functional reagents like cyanic acid chloride.

5. Process according to claim 3 or 4,
**characterized in that**
as granule products native starch extracted in an oxidative, thermal or hydrolytic method is used, or even chemically modified starches, as well as their ether or ester derivatives.

6. Process according to one of the previous claims 3 to 5,
**characterized in that**
tuber and root starches, as well as corn starches, tuber flour, root flour and corn flour are used as starting material.

7. Process according to claim 6,
**characterized in that**
the tuber and root starch is selected from the group consisting of: potato starch, tapioca starch.

8. Process according to claim 6,
**characterized in that**
the corn starch is selected from the group consisting of: maize starch or wheat starch.

9. Process for production of fragmented cross-linked starch according to one of the claims 2 to 10,
**characterized in that**
crosslinking and fragmenting is carried out simultaneously in the extruder.

10. Use of the cross-linked starches fragmented by shearing effect according to claim 1 for production of fibrous products like wood fibre products, wood pulp, wood pulp products, recycling fibre substances and their mixtures, paper, cardboard, wallpapers, plastic fibre products, glass fibre products.

11. Use according to claim 10,
**characterized therein that**
at least one fragmented starch is added to the fibrous substance separately during the fibrous material production, or applied on its surface.

12. Use according to claim 10,
**characterized therein that**
at least one fragmented starch mixed together with inorganic or organic filing substances and pigments like aluminum oxide, barium sulphate, calcium carbonate, koalin, titanium dioxide, talcum, satin white, silicates or syntehtic pigments is added to the fibrous substance during the fibrous substance production, or applied on the fibrous substance product surface.

13. Use of fragmented starches according to claim 10,
**characterized therein that**
the fragmented starches are added to the fibrous substance or applied on the surface of the fibrous product separately, before or after the addition, or after mixing or dispersing together with inorganic or organic additives that can be present as monomers, oligomers or polymers with different charge, polarity or hydrophobia.

14. Use of fragmented starches according to claim 10,
**characterized therein that**
for activating the products, a treatment with a solvent is carried out, in order to achieve an expansion and dispersion.
